# EUROPÄISCHE PATENTSCHRIFT

(11) **EP 3 969 640 B1**
(45) Veröffentlichungstag und Bekanntmachung des Hinweises auf die Patenterteilung: **02.08.2023**
(21) Anmeldenummer: 20735072.9
(22) Anmeldetag: 10.06.2020
(51) Int. Cl.: C25B 9/00, H01M 8/0273, C25B 1/04, C25B 9/23

(54) **ELEKTROLYSEZELLE UND VERFAHREN ZUM HERSTELLEN DER ELEKTROLYSEZELLE**
ELECTROLYSIS CELL AND METHOD FOR PRODUCING THE ELECTROLYSIS CELL
CELLULE D'ÉLECTROLYSE ET PROCÉDÉ DE FABRICATION DE CELLULE D'ÉLECTROLYSE

(30) Priorität: 30.07.2019 EP 19189067
(43) Veröffentlichungstag der Anmeldung: 23.03.2022
(73) Patentinhaber: Siemens Energy Global GmbH & Co. KG, 81739 München (DE)
(72) Erfinder: PLOBNER, Roland, 91284 Neuhaus (DE); SPIES, Alexander, 95478 Kemnath (DE); STRAUB, Jochen, 91056 Erlangen (DE)
(86) Internationale Anmeldenummer: PCT/EP2020/066091
(87) Internationale Veröffentlichungsnummer: WO 2021/018459

(56) Entgegenhaltungen:
- CN-A- 107 881 528
- DE-A1- 2 533 728
- DE-C- 715 873
- JP-A- 2018 028 134
- US-A- 6 117 287
- US-A1- 2002 068 208

## Beschreibung

Die Erfindung betrifft eine Elektrolysezelle und ein Verfahren zum Herstellen der Elektrolysezelle.

Ein Elektrolyseur ist eine Vorrichtung, die mit Hilfe von elektrischem Strom eine Stoffumwandlung herbeiführt (Elektrolyse). Entsprechend der Vielfalt an unterschiedlichen Elektrolysen gibt es auch eine Vielzahl von Elektrolyseuren, wie beispielsweise einen Elektrolyseur für eine Wasserstoffelektrolyse.

Aktuelle Überlegungen gehen dahin, die überschüssige Energie aus erneuerbaren Energiequellen in Zeiten mit viel Sonne und viel Wind, also mit überdurchschnittlicher Solarstrom- oder Windkrafterzeugung, zu speichern. Das Speichern ist insbesondere mit elektrochemischen Zellen, insbesondere Brennstoffzellen oder Elektrolysezellen möglich. Insbesondere kann Energie durch die Herstellung von Wertstoffen gespeichert werden. Ein Wertstoff kann insbesondere Wasserstoff sein, welcher mit Wasserelektrolyseuren erzeugt wird. Mittels des Wasserstoffs kann beispielsweise sogenanntes EE-Gas hergestellt werden.

Dabei erzeugt ein (Wasserstoffelektrolyse-) Elektrolyseur mit Hilfe der elektrischen Energie, insbesondere aus Windenergie oder Sonnenenergie, zunächst Wasserstoff. Danach kann der Wasserstoff in einem Sabatierprozess zusammen mit Kohlendioxid zur Herstellung von Methan verwendet. Das Methan kann dann beispielsweise in ein bereits vorhandenes Erdgasnetz eingespeist werden und ermöglicht so eine Speicherung und einen Transport von Energie zum Verbraucher und kann so ein elektrisches Netz entlasten.

Alternativ dazu kann der vom Elektrolyseur erzeugte Wasserstoff auch unmittelbar weiterverwendet werden, beispielsweise für eine Brennstoffzelle.

Bei einem Elektrolyseur für die Wasserstoffelektrolyse wird Wasser in Wasserstoff und Sauerstoff zerlegt. Bei einem PEM-Elektrolyseur wird typischerweise anodenseitig destilliertes Wasser als Edukt zugeführt und an einer protonendurchlässigen Membran (engl.: "Proton-Exchange-Membrane"; PEM) zu Wasserstoff und Sauerstoff gespalten. Das Wasser wird dabei an der Anode zu Sauerstoff oxidiert. Die Protonen passieren die protonendurchlässige Membran. Kathodenseitig rekombinieren die Protonen zu Wasserstoff.

Ein typischer Aufbau eines PEM-Elektrolyseurs umfasst eine erste Gasdiffusionsschicht und eine zweite Gasdiffusionsschicht. Zwischen den Gasdiffusionsschichten ist die Protonenaustauschmembran (engl.: "Proton-Exchange-Membrane"; PEM) angeordnet. Alle Schichten werden in einem Zellrahmen angeordnet. Die Anordnung der Gasdiffusionsschichten in den Zellrahmen muss derzeit nachteilig mit einer hohen Genauigkeit erfolgen, um eine zuverlässig funktionierende Elektrolysezelle herzustellen. Dies macht die Herstellung der Komponenten sowie die Montage aufwändig.

Aus der DE 25 33 728 A1 geht eine Elektrolysezelle zur Elektrolyse einer Lösung von Alkalisalzen hervor. Die Elektrolysezelle umfasst nebeneinander angeordneten bipolaren Elektroden und wenigstens einen, wenigstens eine Kammer der Elektrolysezone umschließenden Außenrahmen. Auch JP2018028134 offenbart eine Elektrolysezelle für Wasserelektrolyse.

Weitere elektrochemische Zellen mit abgedichteten Zellrahmen sind z.B. in der US 6,117,287 A und der US 2002/068208 A1 beschrieben. In der CN 107 881 528 A ist ein Herstellungsverfahren für PEM-Membranelektrodeneinheit beschrieben.

Aufgabe der Erfindung ist es, eine Elektrolysezelle mit einem Zellrahmen und ein Verfahren zum Herstellen der Elektrolysezelle anzugeben, welches den Aufbau der Elektrolysezelle und das Verfahren zum Herstellen der Elektrolysezelle, insbesondere für große Zellflächen, vereinfacht und eine hohe Zuverlässigkeit im Betrieb der elektrochemischen Zelle ermöglicht.

Die Aufgabe wird mit einer Elektrolysezelle gemäß Anspruch 1 und einem Verfahren gemäß Anspruch 10 gelöst.

Der Zellrahmen für eine erfindungsgemäße elektrochemische Zelle, insbesondere für eine Brennstoffzelle oder eine Elektrolysezelle, weist ein stufenartiges Innenprofil auf. Das stufenartige Innenprofil umfasst wenigstens eine Auflagefläche zur Aufnahme einer planaren Komponente in den Zellrahmen. Die Auflagefläche weist eine Aussparung für eine Dichtung auf.

Eine erfindungsgemäße Elektrolysezelle weist einen Zellrahmen mit einem stufenartigen Innenprofil auf. Das stufenartige Innenprofil umfasst wenigstens eine Auflagefläche zur Aufnahme einer planaren Komponente in den Zellrahmen. Die Auflagefläche weist eine Aussparung für eine Dichtung auf. Die Elektrolysezelle weist weiterhin eine Dichtung auf, welche in der Aussparung der Auflagefläche angeordnet ist. Die Elektrolysezelle weist weiterhin eine Membran-Elektroden-Einheit auf, welche die Auflagefläche des Zellrahmens und die Dichtung bedeckt. Sie weist auch eine erste Gasdiffusionsschicht auf, welche an eine erste Seite der Membran-Elektroden-Einheit grenzt. Sie weist ebenfalls eine zweite Gasdiffusionsschicht auf, welche an eine zweite Seite der Membran-Elektroden-Einheit grenzt. Die Elektrolysezelle weist auch eine elektrisch leitende Abschlussschicht auf, welche auf der ersten Gasdiffusionsschicht aufliegt und mit dem Zellrahmen fest verbunden ist.

Aufgrund des stufenartigen Innenprofils ragt die erste Gasdiffusionsschicht über die Grenzen der zweiten Gasdiffusionsschicht hinaus. Die Spaltmaße zwischen Zellrahmen und Membranen, bzw. Gasdiffusionsschichten können daher vorteilhaft größer sein. Das erleichtert und verkürzt den Montageprozess vorteilhaft. Weiterhin können die Außenkonturen der Membranen und/oder Gasdiffusionsschichten vorteilhaft frei gewählt werden. Es ist lediglich notwendig, dass die Außenkonturen der Membranen und der ersten Gasdiffusionsschicht über die Dichtung hinausragen, so dass eine ausreichende Abstützung der Dichtung gewährleistet ist. Vorteilhaft gewährleistet die Dichtung auch ein Abdichten zwischen der Kathodenseite und der Anodenseite der Elektrolysezelle.

In einer vorteilhaften Ausgestaltung und Weiterbildung der Erfindung ist die Auflagefläche im Wesentlichen flächig. In anderen Worten ist die Auflagefläche plan, also nicht gekrümmt. Die plane Fläche wird lediglich durch die Aussparung unterbrochen. Vorteilhaft können die Membranen, insbesondere als ein MEA (engl.: "Membrane-Electrode-Assembly), und die Gasdiffusionsschichten flach und somit formschlüssig auf der Auflagefläche aufliegen. Hierdurch wird vorteilhaft eine hohe Dichtheit erreicht.

In einer weiteren vorteilhaften Ausgestaltung und Weiterbildung der Erfindung besteht der Zellrahmen aus einem Werkstück. In anderen Worten ist er nicht aus mehreren Komponenten zusammengesetzt, sondern wird aus einem Werkstück hergestellt. Der Zellrahmen kann insbesondere ein Polymer umfassend. Er kann insbesondere aus diesem gegossen werden. Es ist alternativ ebenso denkbar den Zellrahmen aus plattenförmigen Rohmaterialien durch mechanische Bearbeitung herzustellen. Der Zellrahmen umfasst bevorzugt ein elektrisch isolierendes Material.

In einer weiteren vorteilhaften Ausgestaltung und Weiterbildung der Erfindung umschließt der Zellrahmen eine Fläche von wenigstens 3000 cm².

In einer weiteren vorteilhaften Ausgestaltung und Weiterbildung der Erfindung weisen die Membran-Elektroden-Einheit, die erste Gasdiffusionsschicht und die zweite Gasdiffusionsschicht jeweils eine Größe auf, die kleiner ist als die vom Innenprofil des Zellrahmens umschlossene Fläche. Besonders bevorzugt weist eine der Gasdiffusionsschichten eine größere Fläche auf als die andere Gasdiffusionsschicht. Sie sind also unterschiedlich groß. Diese Schichten können in das Innenprofil des Zellrahmens hineingelegt werden. Sie liegen also nicht oben auf dem Zellrahmen auf, sondern sind in der Fläche, die das Innenprofil des Zellrahmens umschließt, angeordnet. Vorteilhaft können somit diese Schichten im Innenprofil des Zellrahmens derart angeordnet werden, dass die Höhe der Schichten die Höhe des Zellrahmens nicht überschreitet. In anderen Worten füllt ein Anordnen der Schichten in dem Zellrahmen das Innere des Zellrahmens, die Schichten ragen aber nicht aus den Zellrahmen hinaus.

In einer weiteren vorteilhaften Ausgestaltung und Weiterbildung der Erfindung weist die elektrisch leitende Abschlussschicht eine Größe auf, die größer ist als die vom Innenprofil des Zellrahmens umschlossene Fläche. In anderen Worten liegt die elektrisch leitende Abschlussschicht somit auf dem Zellrahmen auf. Vorteilhaft kann diese Abschlussschicht somit leicht mechanisch an einer Ober oder Unterseite des Zellrahmens befestigt werden. Eine Befestigung dieser Schicht im Innenprofil des Zellrahmens ist vorteilhaft nicht nötig.

Dass die Auflagefläche eine Aussparung für eine Dichtung aufweist bedeutet in anderen Worten insbesondere, dass die Aussparung für die Dichtung nicht am Rand der Auflagefläche angeordnet ist. Die Aussparung hat also keine seitlichen Grenzen mit der Auflagefläche gemeinsam. Sie ist innerhalb der Auflagefläche angeordnet. Vorteilhaft wird dadurch erreicht, dass eine Dichtung nicht verrutschbar, also in anderen Worten örtlich fixiert, innerhalb der Auflagefläche angeordnet werden kann. Besonders bevorzugt ist eine erste Dichtung fest mit dem Zellrahmen verbunden. Somit erfolgt eine Abdichtung nicht wie bisher über geringe Spaltmaße zwischen dem Zellrahmen und Membranen und/oder Gasdiffusionsschichten, sondern über eine in der Auflagefläche des Zellrahmens angeordnete Dichtung.

Das erfindungsgemäße Verfahren zum Herstellen Elektrolysezelle umfasst mehrere Schritte. Zunächst wird ein Zellrahmen bereitgestellt. Der Zellrahmen weist ein stufenartiges Innenprofil auf. Das stufenartige Innenprofil weist wenigstens eine Auflagefläche zur Aufnahme einer planaren Komponente in den Zellrahmen auf. Die Auflagefläche umfasst dabei eine Aussparung für eine Dichtung. In einem nächsten Schritt wird eine Dichtung in die Aussparung der Auflagefläche gelegt. Wird ein Zellrahmen mit einer fest verbundenen ersten Dichtung eingesetzt, kann dieser Schritt entfallen. Anschließend wird eine Membran-Elektroden-Einheit auf die Auflagefläche gelegt, wobei die Membran-Elektroden-Einheit die Auflagefläche des Zellrahmens und die Dichtung bedeckt. Anschließend wird eine erste Gasdiffusionsschicht auf eine erste Seite der Membran-Elektroden-Einheit gelegt. Anschließend wird eine elektrisch leitende Abschlussschicht auf die erste Gasdiffusionsschicht und den Zellrahmen gelegt. Die Abschlussschicht wird mechanisch an dem Zellrahmen fixiert. Anschließend wird der Zellrahmen mit der Dichtung, der Membran-Elektroden-Einheit der ersten Gasdiffusionsschicht und der Abschlussschicht derart gedreht, dass nun die Abschlussschicht unten angeordnet ist und die Membran Katalysatorschicht oben angeordnet ist. Unten und oben sind hier im Verhältnis zum Schwerefeld der Erde zu sehen. Somit bedeutet unten, dass diese Schicht näher zur Erde hin angeordnet ist als eine Schicht, die oben angeordnet ist. Anschließend wird eine zweite Gasdiffusionsschicht auf einer zweiten Seite der Membran-Elektroden-Einheit in dem Zellrahmen angeordnet.

Vorteilhaft ermöglicht der Einsatz des stufenartigen Innenprofils des Zellrahmens zunächst das Anordnen der Dichtung, der Membran-Elektroden-Einheit, der ersten Gasdiffusionsschicht und der elektrisch leitenden Abschlussschicht durch einfaches Legen in den Zellrahmen. Durch das anschließende Drehen wird das Montieren der zweiten Gasdiffusionsschicht auf der Membran-Elektroden-Einheit vorteilhaft deutlich erleichtert. Während des Drehens wird die Membran-Elektroden-Einheit durch die erste Gasdiffusionsschicht und die Abschlussschicht gestützt und im Zellrahmen eingeklemmt. Das Stützen sorgt vorteilhaft dafür, dass die Membran-Elektroden-Einheit nicht verrutscht und somit derart angeordnet bleibt, dass die Dichtungen bedeckt sind. Anschließend kann die zweite Gasdiffusionsschicht einfach auf die Membran-Elektroden-Einheit aufgelegt werden. Ein einfaches Bestücken des Zellrahmens mit den Schichten ist durch das Drehen auch für sehr große Zellflächen mit geringem Aufwand möglich.

In einer vorteilhaften Ausgestaltung der Erfindung werden der Zellrahmen und die elektrisch leitende Abschlussschicht zueinander abgedichtet.

Um einen Zellstack zu erhalten, werden mehrere Elektrolysezellen übereinandergelegt, zueinander abgedichtet und verpresst.

In einer vorteilhaften Ausgestaltung und Weiterbildung der Erfindung erfolgt das mechanische Fixieren der Abschlussschicht an den Zellrahmen mittels einer Verschraubung, einer Vernietung oder durch ein Klemmmittel.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
Figur 1 einen Schnitt eines Zellrahmens für eine Elektrolysezelle;
Figur 2 eine Draufsicht eines Zellrahmens für eine Elektrolysezelle;
Figur 3 einen Schnitt eines Zellrahmens mit Schichten und mechanischer Fixierung während der Montage;
Figur 4 einen Schnitt einer Elektrolysezelle mit dem Zellrahmen;
Figur 5 ein Fließbild des Herstellungsverfahrens einer Elektrolysezelle.

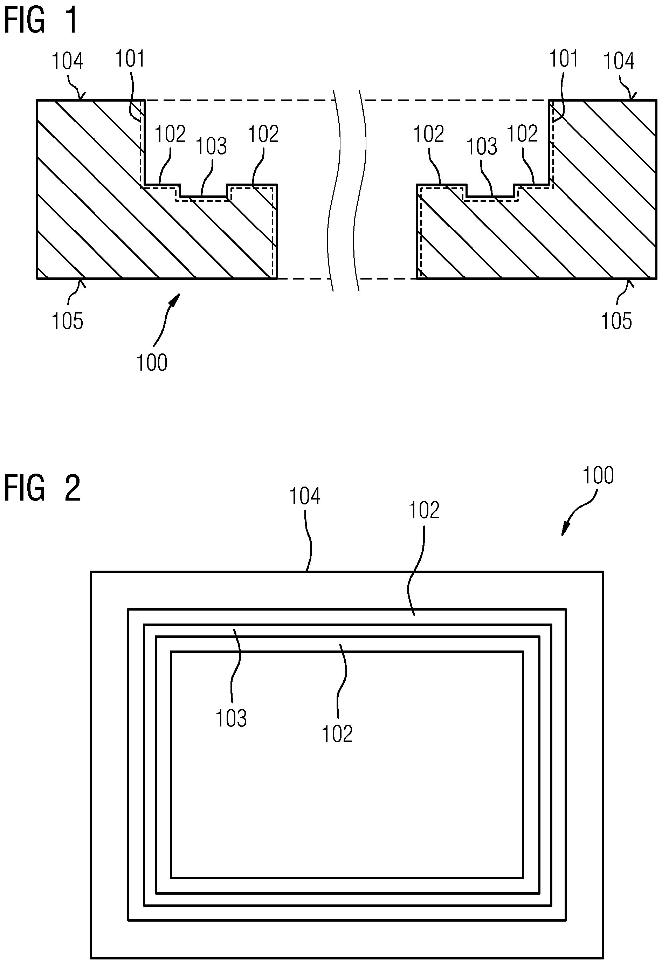

Figur 1 zeigt einen Schnitt eines Zellrahmens 100 für eine elektrochemische Zelle, insbesondere eine Brennstoffzelle oder eine Elektrolysezelle, mit einem stufenartigen Innenprofil 101. Das stufenartige Innenprofil 101 weist eine Auflagefläche 102 auf. In der Auflagefläche 102 ist eine Aussparung 103 angeordnet. Der Zellrahmen 100 weist eine Rahmenoberseite 104 und eine Rahmenunterseite 105 auf.

Figur 2 zeigt eine Draufsicht des Zellrahmens 100 mit einem stufenartigen Innenprofil 101. In diesem Beispiel ist der Zellrahmen 100 rechteckig ausgeführt. Es ist aber ebenso denkbar, dass dieser eine runde oder ovale Form, oder weitere technisch sinnvolle Formen aufweist.

In diesem Ausführungsbeispiel wird der Aufbau einer Elektrolysezelle beschrieben. Es ist aber alternativ ebenso möglich, den Zellrahmen 100 für den Aufbau einer Brennstoffzelle einzusetzen.

Zu Beginn des Aufbaus der Elektrolysezelle ist der Zellrahmen 100 im Gravitationsfeld der Erde derart angeordnet, dass die Rahmenoberseite 104 nach oben, also von der Erde weg, und die Rahmenunterseite 105 nach unten, also zur Erde hin, orientiert ist. Dies ist in Figur 1 gezeigt. Der Zellrahmen 100 ist aus einem Werkstück gefertigt. In einem ersten Montageschritt wird in die Aussparung 103 eine Dichtung 6 gelegt. Diese Dichtung 6 kann als Dichtungsband, als aufgetragene Dichtung oder als Dichtungsring ausgeführt sein. Die Dichtung 6 umfasst typischerweise Materialien wie PTFE, Silikon, Fluorkautschuk oder weitere Materialien aus der Gruppe der Elastomere.

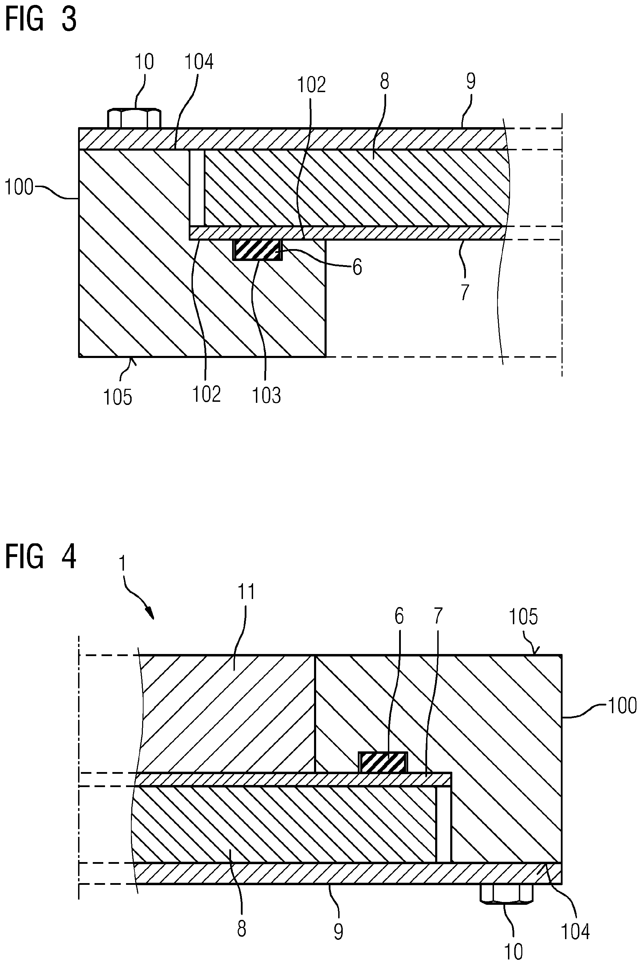

Figur 3 zeigt den Zellrahmen 100 in einem Zwischen-Montagestand. Die Dichtung 6 ist in der Aussparung 103 angeordnet. Anschließend wird eine Membran-Elektroden-Einheit 7 auf die Auflagefläche 102 gelegt. Die Membran-Elektroden-Einheit 7 weist eine Größe auf, die nahezu den Zellrahmen komplett ausfüllt. Sinnvollerweise sollte die Größe der Membran-Elektroden-Einheit 7 wenigstens derart gewählt sein, dass die Membran-Elektroden-Einheit 7 sicher und in jedem Toleranzfall über die Dichtung 6 hinausreicht, wie in Figur 3 zu sehen ist. Anschließend wird eine erste Gasdiffusionsschicht 8 von oben auf die Membran-Elektroden-Einheit 7 gelegt. Die Größe der ersten Gasdiffusionsschicht 8 sollte wenigstens derart gewählt sein, sie die von der Dichtung umschlossenen Fläche überragt. In anderen Worten liegt die Gasdiffusionsschicht 8 indirekt auf der Stufe des stufenartigen Innenprofils 101 auf. Sowohl die Größe der Membran-Elektroden-Einheit 7 als auch der ersten Gasdiffusionsschicht 8 sollten derart gewählt sein, dass sie nicht größer sind als die vom Zellrahmen 100 umschlossene Fläche. Vorteilhaft wird anschließend noch eine Dichtung zur Abdichtung zwischen Zellrahmen 100 und elektrisch leitender Abschlussschicht eingebracht. Wahlweise kann die Dichtung bereits ein Teil von Zellrahmen 100 oder elektrisch leitender Abschlussschicht 9 sein. Auf die erste Gasdiffusionsschicht 8 wird anschließend eine elektrisch leitende Abschlussschicht 9 gelegt. Diese elektrisch leitende Abschlussschicht 9 wird mit einem mechanischen Fixiermittel, in diesem Beispiel mit einer Schraube 10, fest an dem Zellrahmen 100 fixiert. Figur 3 zeigt, wie zu diesem Montagezeitpunkt der Zellrahmen mit den unterschiedlichen Schichten 7, 8, 9, der Dichtung 6 und der Verschraubung 10 ausgestaltet ist. In einem nächsten Schritt wird der Zellrahmen 100 mit der Dichtung 6, der Membran-Elektroden-Einheit 7, der der ersten Gasdiffusionsschicht 8 und der Abschlussschicht 9 gedreht.

Figur 4 zeigt den Zellrahmen 100 nachdem er gedreht wurde. Die Rahmenoberseite 104 ist nun unten angeordnet, die Rahmenunterseite 105 ist nun oben angeordnet. In anderen Worten ist im Gravitationsfeld der Erde die Rahmenunterseite 105 nun weiter von der Erde entfernt angeordnet als die Rahmen Oberseite 104. In einem nächsten Schritt wird eine zweite Gasdiffusionsschicht 11 auf der Membran-Elektroden-Einheit 7 aufgelegt. Die Membran-Elektroden-Einheit 7 grenzt nun direkt auf einer Seite an die zweite Gasdiffusionsschicht 11. An der anderen Seite grenzt die Membran-Elektroden-Einheit 7 direkt an die erste Gasdiffusionsschicht 8. Die so montierte Elektrolysezelle 1 kann nun mit mehreren Elektrolysezellen 1 zu einem Stack gestapelt werden. Dabei werden die Elektrolysezellen zueinander abgedichtet. Vorteilhafterweise ermöglicht das Drehen der halbbestückten Zelle nach dem Montage-Zwischenstand in Figur 3 ein einfaches Montieren der zweiten Gasdiffusionsschicht 11 für große Zellrahmen-Flächen von wenigstens 3000 cm². Die Größe der Membran-Elektroden-Einheit 7 sollte lediglich derart gewählt werden, dass sie wenigstens die Dichtung 6 überdeckt aber kleiner ist als die Zellrahmen Innenfläche. Die Membran-Elektroden-Einheit 7 wird durch die erste Gasdiffusionsschicht 8 gestützt und gegen Verrutschen durch Einklemmen gesichert. Dies ermöglicht ein schnelleres und effizienteres Montieren der Membran-Elektroden-Einheit 7, wobei gleichzeitig die Dichtheit zwischen einer ersten Zellhälfte, in der die erste Gasdiffusionsschicht 8 angeordnet ist und einer zweiten Zellhälfte, in der die zweite Gasdiffusionsschicht 11 angeordnet ist, sicher gewährleistet werden kann.

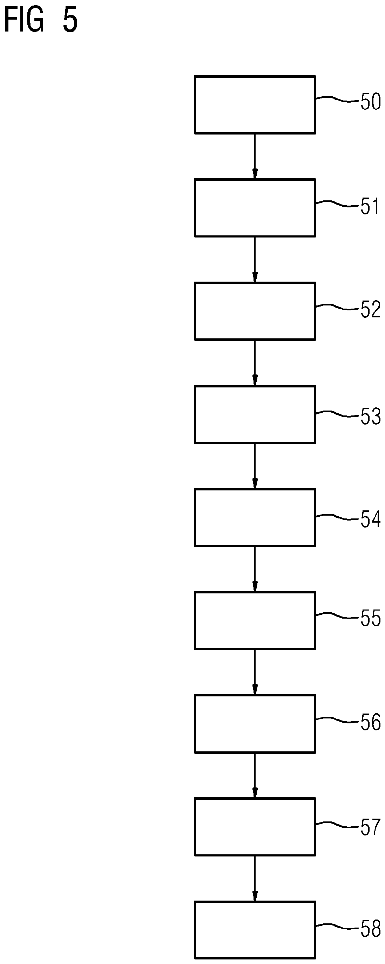

Figur 5 zeigt schematisch ein Fließbild des Montageverfahrens mit den unterschiedlichen Schritten. Zunächst wird der Zellrahmen 100 bereitgestellt 50. Anschließend wird die Dichtung 6 in die Aussparung 103 eingelegt 51. Schritt 51 kann entfallen, wenn die Dichtung bereits als Teil des Zellrahmens ausgeführt wurde. Danach erfolgt das Legen der Membran-Elektroden-Einheit in den Zellrahmen 52. Danach erfolgt das Auflegen der ersten Gasdiffusionsschicht 8 auf die Membran-Elektroden-Einheit 7 in einem Schritt 53. Es kann nun noch eine Dichtung in den Zellrahmen eingelegt werden. Dieser Schritt kann entfallen, wenn die Dichtung bereits ein Teil des Zellrahmens 100 oder der Abschlussschicht 9 ist. Im folgenden Schritt 55 wird eine Abschlussschicht 9 auf die erste Gasdiffusionsschicht 8 gelegt. Anschließend erfolgt im Schritt 56 das mechanische Fixieren der Abschlussschicht 9 am Zellrahmen 100. Anschließend wird im Schritt 57 der Zellrahmen 100 mit den Schichten 7, 8, 9 gedreht. Anschließend wird im Schritt 58 eine zweite Gasdiffusionsschicht 11 auf die Membran-Elektroden-Einheit 7 aufgebracht.

## Patentansprüche

1. Elektrolysezelle (1) umfassend:
- einen Zellrahmen (100), wobei der Zellrahmen (100) ein stufenartiges Innenprofil (101) aufweist, wobei das stufenartige Innenprofil (101) wenigstens eine Auflagefläche (102) zur Aufnahme einer planaren Komponente in den Zellrahmen (100) umfasst, wobei die Auflagefläche (102) eine Aussparung (103) für eine Dichtung (6) umfasst,
- eine erste Dichtung (6), welche in der Aussparung (103) der Auflagefläche (102) angeordnet ist,
- eine Membran-Elektroden-Einheit (7), welche die Auflagefläche (102) des Zellrahmens (100) und die Dichtung (6) bedeckt,
- eine erste Gasdiffusionsschicht (8), welche an eine erste Seite der Membran-Elektroden-Einheit (7) grenzt,
- eine zweite Gasdiffusionsschicht (11), welche an eine zweite Seite der Membran-Elektroden-Einheit (7) grenzt und
- eine elektrisch-leitende Abschlussschicht (9), welche auf der ersten Gasdiffusionsschicht (8) aufliegt und mit dem Zellrahmen (100) fest verbunden ist,
wobei die Außenkonturen der Membran-Elektroden-Einheit (7) und der ersten Gasdiffusionsschicht (8) über die Dichtung (6) hinausragen.

2. Elektrolysezelle (1) nach Anspruch 1, wobei die Membran-Elektroden-Einheit (7), die erste Gasdiffusionsschicht (8) und die zweite Gasdiffusionsschicht (11) eine Größe aufweisen, die kleiner ist als die vom Innenprofil (101) des Zellrahmens (100) umschlossene Fläche.

3. Elektrolysezelle (1) nach einem der Ansprüche 1 oder 2, wobei die elektrisch-leitende Abschlussschicht (9) eine Größe aufweist, die größer ist als die vom Innenprofil (101) des Zellrahmens (100) umschlossene Fläche.

4. Elektrolysezelle (1) nach einem der vorhergehenden Ansprüche, wobei der Zellrahmen (100) aus einem Werkstück besteht.

5. Elektrolysezelle (1) nach einem der vorhergehenden Ansprüche, wobei der Zellrahmen (100) eine Fläche von wenigstens 3000 cm² umschließt.

6. Elektrolysezelle (1) nach einem der vorhergehenden Ansprüche, wobei der Zellrahmen (100) elektrisch isolierendend ausgestaltet ist.

7. Elektrolysezelle (1) nach Anspruch 5, wobei der Zellrahmen (100) ein elektrisch isolierendes Material umfasst.

8. Elektrolysezelle (1) nach einem der vorhergehenden Ansprüche, wobei in der Aussparung eine erste Dichtung fest mit dem Zellrahmen verbunden ist.

9. Elektrolysezelle (1) nach einem der vorhergehenden Ansprüche, wobei zwischen einer Rahmenoberseite (104) und der elektrisch leitenden Abschlussschicht (9) eine zweite Dichtung angeordnet ist.

10. Verfahren zum Herstellen einer Elektrolysezelle (1) mit folgenden Schritten:
- Bereitstellen eines Zellrahmens (100), wobei der Zellrahmen (100) ein stufenartiges Innenprofil (101) aufweist, wobei das stufenartige Innenprofil (101) wenigstens eine Auflagefläche (102) zur Aufnahme einer planaren Komponente in den Zellrahmen (100) aufweist, wobei die Auflagefläche (102) eine Aussparung (103) für eine Dichtung (6) umfasst,
- Legen einer Dichtung (6) in die Aussparung (103) der Auflagefläche (102),
- Legen einer Membran-Elektroden-Einheit (7) auf die Auflagefläche (102), wobei die Membran-Elektroden-Einheit (7) die Auflagefläche (102) des Zellrahmens (100) und die Dichtung (6) bedeckt,
- Legen einer ersten Gasdiffusionsschicht (8) auf eine erste Seite der Membran-Elektroden-Einheit (7), wobei die Außenkonturen der Membran-Elektroden-Einheit (7) und der ersten Gasdiffusionsschicht (8) über die Dichtung (6) hinausragen
- Legen einer elektrisch leitenden Abschlussschicht (9) auf die erste Gasdiffusionsschicht (8) und den Zellrahmen (100),
- Mechanisches Fixieren der Abschlussschicht (9) an dem Zellrahmen (100),
- Drehen des Zellrahmens (100) mit der Dichtung (6), der Membran-Elektroden-Einheit (7), der ersten Gasdiffusionsschicht (8), und der Abschlussschicht (9) derart, dass nun die Abschlussschicht (9) unten angeordnet ist und die Membran-Elektroden-Einheit (7) oben angeordnet ist,
- Aufbringen einer zweiten Gasdiffusionsschicht (11) auf einer zweiten Seite der Membran-Elektroden-Einheit (7) in dem Zellrahmen (100),
- Verspannen der Schichten in dem Zellrahmen.

11. Verfahren nach Anspruch 10, wobei das mechanische Fixieren der Abschlussschicht (9) an dem Zellrahmen (100) mittels einer Verschraubung (10), Vernietung oder durch ein Klemmmittel erfolgt.

## Claims

1. Electrolysis cell (1) comprising:
- a cell frame (100), wherein the cell frame (100) has a step-like interior profile (101), wherein the step-like interior profile (101) comprises at least one support surface (102) for accommodating a planar component in the cell frame (100), wherein the support surface (102) comprises a recess (103) for a seal (6),
- a first seal (6) which is arranged in the recess (103) of the support surface (102),
- a membrane electrode assembly (7) which covers the support surface (102) of the cell frame (100) and the seal (6),
- a first gas diffusion layer (8) which adjoins a first side of the membrane electrode assembly (7),
- a second gas diffusion layer (11) which adjoins a second side of the membrane electrode assembly (7) and
- an electrically conductive closure layer (9) which lies on the first gas diffusion layer (8) and is firmly connected to the cell frame (100),
wherein the exterior contours of the membrane electrode assembly (7) and the first gas diffusion layer (8) project beyond the seal (6).

2. Electrolysis cell (1) according to Claim 1, wherein the membrane electrode assembly (7), the first gas diffusion layer (8) and the second gas diffusion layer (11) have a size which is smaller than the area enclosed by the interior profile (101) of the cell frame (100).

3. Electrolysis cell (1) according to either of Claims 1 and 2, wherein the electrically conductive closure layer (9) has a size which is greater than the area enclosed by the interior profile (101) of the cell frame (100).

4. Electrolysis cell (1) according to any of the preceding claims, wherein the cell frame (100) consists of one workpiece.

5. Electrolysis cell (1) according to any of the preceding claims, wherein the cell frame (100) encloses an area of at least 3000 cm².

6. Electrolysis cell (1) according to any of the preceding claims, wherein the cell frame (100) is electrically insulating.

7. Electrolysis cell (1) according to Claim 5, wherein the cell frame (100) comprises an electrically insulating material.

8. Electrolysis cell (1) according to any of the preceding claims, wherein a first seal is firmly connected to the cell frame in the recess.

9. Electrolysis cell (1) according to any of the preceding claims, wherein a second seal is arranged between a frame upper side (104) and the electrically conductive closure layer (9).

10. Process for producing an electrolysis cell (1), comprising the following steps:
- provision of a cell frame (100), wherein the cell frame (100) has a step-like interior profile (101), wherein the step-like interior profile (101) has at least one support surface (102) for accommodating a planar component in the cell frame (100), wherein the support surface (102) comprises a recess (103) for a seal (6),
- laying of a seal (6) into the recess (103) of the support surface (102),
- laying of a membrane electrode assembly (7) on the support surface (102), wherein the membrane electrode assembly (7) covers the support surface (102) of the cell frame (100) and the seal (6),
- laying of a first gas diffusion layer (8) on a first side of the membrane electrode assembly (7), wherein the exterior contours of the membrane electrode assembly (7) and the first gas diffusion layer (8) project beyond the seal (6),
- laying of an electrically conductive closure layer (9) on the first gas diffusion layer (8) and the cell frame (100),
- mechanical fixing of the closure layer (9) to the cell frame (100),
- rotation of the cell frame (100) together with the seal (6), the membrane electrode assembly (7), the first gas diffusion layer (8), and the closure layer (9) in such a way that the closure layer (9) is now arranged at the bottom and the membrane electrode assembly (7) is arranged at the top,
- application of a second gas diffusion layer (11) to a second side of the membrane electrode assembly (7) in the cell frame (100),
- clamping of the layers in the cell frame.

11. Process according to Claim 10, wherein the mechanical fixing of the closure layer (9) to the cell frame (100) is effected by means of a screw connection (10), riveting or by a clamp.

## Revendications

1. Cellule (1) d'électrolyse comprenant :
- un cadre (100) de cellule, dans lequel le cadre (100) de cellule a un profil (101) intérieur de type à gradins, dans lequel le profil (101) intérieur de type à gradins comprend au moins une surface (102) de support pour supporter un composant plan dans le cadre (100) de cellule, dans lequel la surface (102) de support comprend un évidement (103) pour une étanchéité (6),
- une première étanchéité (6), qui est disposée dans l'évidement (103) de la surface (102) de support,
- une unité (7) de membrane - électrode, qui recouvre la surface (102) de support du cadre (100) de cellule et l'étanchéité (6),
- une première couche (8) de diffusion gazeuse, qui est voisine d'une première face de l'unité (7) de membrane - électrode,
- une deuxième couche (11) de diffusion gazeuse, qui est voisine d'une deuxième face de l'unité (7) de membrane - électrode et
- une couche (9) de fermeture, qui est conductrice de l'électricité, qui s'applique à la première couche (8) de diffusion gazeuse et qui est reliée fixement au cadre (100) de la cellule,
dans laquelle les contours de l'unité (7) de membrane - électrode et de la première couche (8) de diffusion gazeuse font saillie de l'étanchéité (6).

2. Cellule (1) d'électrolyse suivant la revendication 1, dans laquelle l'unité (7) de membrane - électrode, la première couche (8) de diffusion gazeuse et la deuxième couche (11) de diffusion gazeuse ont une dimension, qui est plus petite que la surface entourée par le profil (101) intérieur du cadre (100) de la cellule.

3. Cellule (1) d'électrolyse suivant l'une des revendications 1 ou 2, dans laquelle la couche (9) de fermeture conductrice de l'électricité a une dimension, qui est plus grande que la surface entourée par le profil (101) intérieur du cadre (100) de la cellule.

4. Cellule (1) d'électrolyse suivant l'une des revendications précédentes, dans laquelle le cadre (100) de la cellule est en une pièce.

5. Cellule (1) d'électrolyse suivant l'une des revendications précédentes, dans laquelle la cadre (100) de la cellule entoure une surface d'au moins 3000 cm².

6. Cellule (1) d'électrolyse suivant l'une des revendications précédentes, dans laquelle la cadre (100) de la cellule est isolant électriquement.

7. Cellule (1) d'électrolyse suivant la revendication 5, dans laquelle la cadre (100) de la cellule comprend un matériau isolant du point de vue électrique.

8. Cellule (1) d'électrolyse suivant l'une des revendications précédentes, dans laquelle une première étanchéité est reliée fixement au cadre de la cellule dans l'évidement.

9. Cellule (1) d'électrolyse suivant l'une des revendications précédentes, dans laquelle une deuxième étanchéité est disposée entre le côté (104) supérieur du cadre et la couche (9) de fermeture conductrice de l'électricité.

10. Procédé de fabrication d'une cellule (1) d'électrolyse comprenant les stades suivants :
- on se procure un cadre (100) de cellule, dans lequel le cadre (100) de cellule a un profil (101) intérieur de type à gradins, dans lequel le profil (101) intérieur de type à gradins comprend au moins une surface (102) de support pour supporter un composant plan dans le cadre (100) de cellule, dans lequel la surface (102) de support comprend un évidement (103) pour une étanchéité (6),
- on met une étanchéité (6) dans l'évidement (103) de la surface (102) de support,
- on met une unité (7) de membrane - électrode sur la surface (102) de support, dans lequel l'unité (7) de membrane - électrode recouvre la surface (102) de support du cadre (100) de la cellule et l'étanchéité (6),
- on met une première couche (8) de diffusion gazeuse sur une première face de l'unité (7) de membrane - électrode, dans lequel les contours extérieurs de l'unité (7) de membrane - électrode et de la première couche (8) de diffusion gazeuse font saillie de l'étanchéité (6),
- on met une couche (9) de fermeture conductrice de l'électricité sur la première couche (8) de diffusion gazeuse et sur le cadre (100) de la cellule,
- on immobilise mécaniquement la couche (9) de fermeture sur le cadre (100) de la cellule,
- on fait tourner le cadre (100) de la cellule avec l'étanchéité (6), l'unité (7) de membrane - électrode, la première couche (8) de diffusion gazeuse et la couche (9) de fermeture, de manière à ce que maintenant la couche (9) de fermeture soit disposée en bas, et de manière à ce que l'unité (7) de membrane - électrode soit disposée en haut,
- on dépose une deuxième couche (11) de diffusion gazeuse sur une deuxième face de l'unité (7) de membrane - électrode dans le cadre (100) de la cellule,
- on bloque les couches dans le cadre de la cellule.

11. Procédé suivant la revendication 10, dans lequel l'immobilisation mécanique de la couche (9) de fermeture sur la cadre (100) de la cellule s'effectue au moyen d'un vissage (10), d'un rivetage ou par un agent de collage.
